**Europäisches Patentamt**

**European Patent Office**

**Office européen des brevets**

(19)

(11) Numéro de publication : **0 508 856 A1**

(12) **DEMANDE DE BREVET EUROPEEN**

(21) Numéro de dépôt : **92400850.1**

(22) Date de dépôt : **26.03.92**

(51) Int. Cl.⁵ : **B62D 1/16,** F16D 1/08, F16D 1/06

(30) Priorité : **10.04.91 FR 9104373**

(43) Date de publication de la demande :
**14.10.92 Bulletin 92/42**

(84) Etats contractants désignés :
**AT BE CH DE DK ES FR GB GR IT LI LU MC NL PT SE**

(71) Demandeur : **ECIA - EQUIPEMENTS ET COMPOSANTS POUR L'INDUSTRIE AUTOMOBILE**
**F-25400 Audincourt (Doubs) (FR)**

(72) Inventeur : **Hoblingre, André**
**7, rue Vincent d'Indy**
**F-25700 Valentigney (FR)**
Inventeur : **Passebecq, Ghislain**
**21, Rue des Grands Bois**
**F-25400 Audincourt (FR)**

(74) Mandataire : **Habasque, Etienne Joel Jean-François et al**
**Cabinet Lavoix 2, Place d'Estienne d'Orves**
**F-75441 Paris Cédex 09 (FR)**

(54) **Dispositif de serrage de sécurité d'un organe mâle dans un étrier d'un organe femelle, utilisable notamment pour relier deux portions d'une colonne de direction de véhicule automobile.**

(57) Ce dispositif de serrage de sécurité d'un organe mâle (3) dans un étrier (4) comprenant deux parois latérales (6,7) reliées par une paroi intermédiaire (12) d'un organe femelle, utilisable notamment pour relier deux portions (1,2) d'une colonne de direction de véhicule automobile, du type comportant un tirant (5) s'étendant entre les deux parois latérales (6,7) de l'étrier (4) et dont une extrémité comporte une surface de butée (8) en appui sur l'une des parois latérales (6) de l'étrier (4) et dont l'autre extrémité (9) est filetée et adaptée pour coopérer par vissage avec un écrou de serrage (10), pour rapprocher les parois latérales (6,7) de l'étrier et serrer l'organe mâle dans celui-ci et des moyens de maintien de sécurité de l'organe mâle (3) en position dans l'étrier (4) en cas de rupture du tirant (5), est caractérisé en ce que les moyens de maintien de sécurité comprennent un organe de maintien (11) disposé le long du tirant et dont les extrémités coopèrent avec les parois latérales (6,7) de l'étrier (4) pour maintenir l'organe mâle.

FIG.1

EP 0 508 856 A1

Jouve, 18, rue Saint-Denis, 75001 PARIS

La présente invention concerne un dispositif de serrage de sécurité d'un organe mâle dans un étrier comportant deux parois latérales reliées par une paroi intermédiaire d'un organe femelle, utilisable notamment pour relier deux portions d'une colonne de direction de véhicule automobile.

Plus particulièrement, le dispositif selon l'invention peut être utilisé pour relier deux portions d'arbre de direction d'un véhicule.

On connaît déjà dans l'état de la technique des dispositifs de serrage de ce type qui comportent un tirant s'étendant entre les parois latérales de l'étrier et dont une extrémité comporte une surface de butée en appui sur l'une des parois latérales de l'étrier et dont l'autre extrémité est filetée et adaptée pour coopérer par vissage, avec un écrou de serrage par exemple freiné, pour rapprocher les parois latérales de l'étrier et serrer l'organe mâle dans celui-ci.

L'organe mâle est ainsi maintenu en position dans l'étrier d'une part par les différentes parois latérales et intermédiaire de l'étrier et d'autre part par le tirant, ce qui permet de transmettre par exemple un couple de rotation entre les deux portions de la colonne de direction.

Cependant, cette liaison est une liaison de sécurité et il est nécessaire de prévoir des moyens de maintien de sécurité de l'organe mâle en position dans l'étrier en cas de rupture du tirant.

Dans l'état de la technique, ces moyens sont constitués par une pince disposée autour de l'étrier et comportant des branches à l'extrémité desquelles sont prévus des crochets adaptés pour coopérer avec l'organe mâle pour le maintenir en position dans l'étrier en cas de rupture du tirant.

On conçoit que ceci présente un certain nombre d'inconvénients, car l'utilisation de cette pince entraîne une augmentation du prix de revient de ce dispositif et des difficultés de montage, car celui-ci ne peut pas être automatisé.

De plus, on a constaté qu'il existait du fait des tolérances de fabrication des différents éléments mentionnés précédemment, un jeu entre la face supérieure de l'organe mâle et le tirant et que ce jeu pouvait se traduire par un défaut de positionnement de l'organe mâle dans l'étrier et un mauvais alignement des deux portions d'arbre.

Pour résoudre ces problèmes de défaut de positionnement de l'organe mâle dans l'étrier et de mauvais alignement des deux portions d'arbre, on a déjà proposé dans l'état de la technique d'utiliser des moyens de poussée de l'organe mâle contre la paroi intermédiaire de l'étrier lors du vissage.

Ces moyens comprennent par exemple une came disposée autour du tirant et appliquant sur l'organe mâle une poussée, lors de la rotation de ce tirant pendant le vissage de l'écrou freiné.

Cependant, ce dispositif présente un certain nombre d'inconvénients car la force de poussée de l'organe mâle par cette came et directement proportionnelle au couple de freinage de l'écrou. Le couple de freinage de l'écrou est nécessairement limité et réduit en conséquence cette force de poussée, de sorte que l'on n'obtient pas un rattrapage de jeux et un maintien suffisants de l'organe mâle dans l'étrier.

Le but de l'invention est donc de résoudre ces problèmes en proposant un dispositif de serrage de sécurité qui soit simple, d'un prix de revient peu élevé, dont l'encombrement soit le plus réduit possible, dont le montage puisse être automatisé et qui permette par ailleurs d'appliquer fermement l'organe mâle contre la paroi intermédiaire de l'étrier.

A cet effet, l'invention a pour objet un dispositif de serrage de sécurité d'un organe mâle dans un étrier comportant deux parois latérales reliées par une paroi intermédiaire d'un organe femelle, utilisable notamment pour relier deux portions d'une colonne de direction de véhicule automobile, du type comportant un tirant s'étendant entre les deux parois latérales de l'étrier et dont une extrémité comporte une surface de butée, en appui sur l'une des parois latérales de l'étrier et dont l'autre extrémité est filetée et adaptée pour coopérer par vissage avec un écrou de serrage, pour rapprocher les parois latérales de l'étrier et serrer l'organe mâle dans celui-ci et des moyens de maintien de sécurité de l'organe mâle en position dans l'étrier en cas de rupture du tirant, caractérisé en ce que les moyens de maintien comprennent un organe de maintien de sécurité, disposé le long du tirant et dont les extrémités coopèrent avec les parois latérales de l'étrier pour maintenir l'organe mâle.

Avantageusement, cet organe de maintien est adapté pour exercer une force de poussée de l'organe mâle contre la paroi intermédiaire de l'étrier.

L'invention sera mieux comprise à l'aide de la description qui va suivre, donnée uniquement à titre d'exemple et faite en se référant aux dessins annexés, sur lesquels :

– la Fig.1 représente une vue en perspective d'un premier mode de réalisation d'un dispositif de serrage de sécurité selon l'invention; et

– les Fig.2,3,4 et 5 représentent différents modes de réalisation d'un organe de maintien et de poussée entrant dans la constitution d'un dispositif de serrage de sécurité selon l'invention.

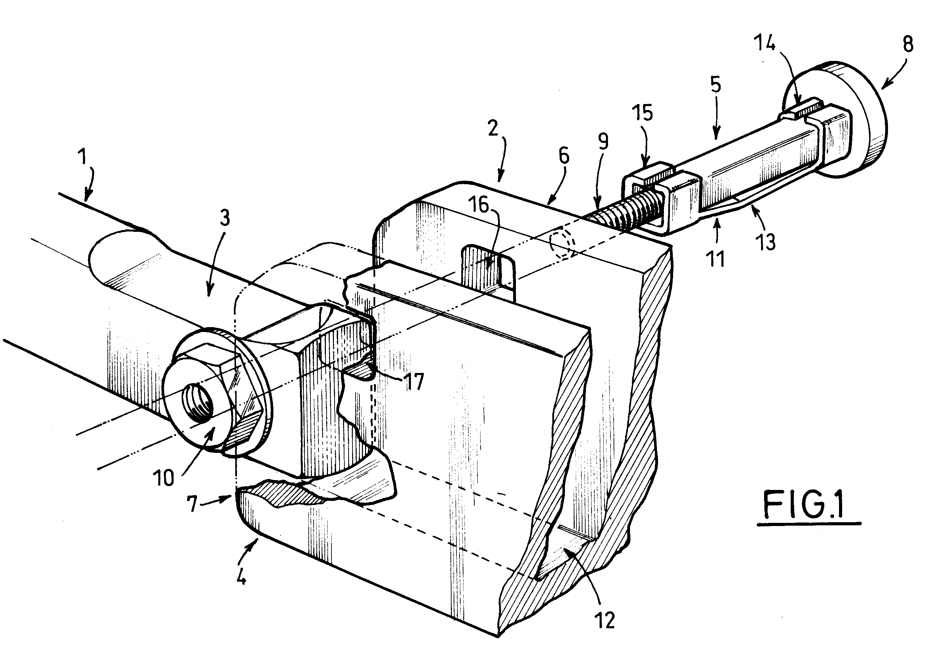

Ainsi qu'on peut le voir sur la Fig.1, un dispositif de serrage de sécurité, selon l'invention, peut être utilisé pour relier deux portions 1 et 2 par exemple d'un arbre d'une colonne de direction de véhicule automobile.

L'une de ces portions comporte un organe mâle désigné par la référence générale 3 sur cette figure et l'autre, un étrier par exemple de section de forme générale en U, désigné par la référence générale 4.

L'organe mâle est donc introduit dans l'étrier et serré et bloqué dans celui-ci par rapprochement des parois latérales de l'étrier, comme cela sera décrit plus en détail par la suite.

Ce dispositif de serrage comporte également un tirant 5 s'étendant entre les deux parois latérales 6 et 7 de l'étrier, et dont une extrémité comporte une surface de butée 8 en appui sur l'une des parois latérales 6 de l'étrier 4. L'autre extrémité de ce tirant, c'est à dire l'extrémité référencée 9 sur cette figure, est filetée et adaptée pour coopérer par vissage avec un écrou 10 de serrage, par exemple freiné, pour rapprocher les parois latérales 6 et 7 de l'étrier et serrer l'organe mâle 3 dans l'étrier.

Il est également prévu des moyens de maintien de sécurité 11 de l'organe mâle 3 en position dans l'étrier 4 en cas de rupture du tirant 5.

Ces moyens de maintien comportent selon l'invention un organe de maintien disposé le long et par exemple autour du tirant 5 et dont les extrémités coopèrent avec les parois latérales 6 et 7 de l'étrier pour maintenir l'organe mâle.

Cet organe est maintenu en position entre les parois latérales de l'étrier, indépendamment du tirant, comme cela sera décrit plus en détail par la suite.

Cet organe de maintien permet donc, en cas de rupture du tirant, de maintenir l'organe mâle 3, en position dans l'étrier 4, même si ce tirant se casse en deux et que les deux parties de celui-ci se séparent et se dégagent de l'étrier, en empêchant cet organe mâle de basculer dans l'étrier.

En fait, cet organe de maintien peut être constitué par un organe permettant d'exercer une force de poussée sur l'organe mâle 3 pour le plaquer contre la paroi intermédiaire 12 de fond de l'étrier 4, avant serrage de l'organe mâle 3 entre les parois latérales de l'étrier 4, par vissage par exemple de l'écrou sur l'extrémité correspondante du tirant.

Dans le mode de réalisation représenté sur cette figure 1, cet organe présente une longueur supérieure à la distance séparant les parois latérales 6 et 7 de l'étrier 4 avant vissage, de manière à se déformer radialement et donc à pousser l'organe mâle 3, contre la paroi intermédiaire 12 de l'étrier 4, avant le rapprochement des parois latérales 6 et 7 de celui-ci, lors du vissage.

Selon un mode de réalisation, cet organe déformable peut comporter un manchon de matériau déformable par expansion lors de sa compression, disposé autour du tirant.

Dans le mode de réalisation représenté sur cette figure 1, l'organe de maintien et de poussée déformable comporte en fait une âme centrale 13 déformable, s'étendant le long du tirant entre deux bagues d'accrochage 14 et 15 disposées autour de celui-ci, dans des évidements 16 et 17 des parois latérales 6 et 7 de l'étrier.

Cette âme centrale 13 est formée par au moins une lame de matériau déformable, venue de matière avec les bagues.

On notera qu'il peut être prévu des moyens de détrompage et de maintien en position de cet organe de maintien et de poussée par rapport à l'organe mâle, de manière qu'il soit engagé entre les parois latérales de l'étrier avec la lame 13 en regard de l'organe mâle 3 et que celle-ci soit maintenue dans cette position lors du vissage de l'écrou sur le tirant.

Dans le mode de réalisation représenté sur cette figure, ce maintien en position et ce détrompage sont réalisés par l'intermédiaire de sections polygonales et par exemple rectangulaire des bagues 14 et 15 de l'organe de poussée et des évidements correspondants 16 et 17 ménagés dans les parois latérales 6 et 7 de l'étrier.

Bien entendu, d'autres modes de réalisation de ces moyens de détrompage et de maintien peuvent être envisagés.

On conçoit ainsi qu'avant vissage de l'écrou, l'organe de maintien et de poussée 11 s'étend entre les parois latérales 6 et 7 de l'étrier et que l'une ou l'autre ou les deux extrémités des bagues 14 et 15 de celui-ci font saillie au-delà de ces parois latérales.

Lors du vissage, l'écrou 10 vient tout d'abord en butée contre l'extrémité de l'une de ces bagues, de sorte que si l'on poursuit le vissage de cet écrou sur le tirant, celui-ci a tendance à pousser cette bague, de manière que l'âme centrale 13 de l'organe de poussée, se déforme et pousse l'organe mâle 3 vers le fond de l'étrier pour plaquer la face inférieure de cet organe mâle 3 contre la paroi intermédiaire de fond 12 de l'étrier 4.

Une fois cette déformation réalisée, l'écrou de serrage 10 lors de la poursuite de son vissage, rapproche les flasques 6 et 7 de l'étrier 4 pour serrer et bloquer l'organe mâle en position dans l'étrier.

Les jeux de montage existants sont donc réduits, voire supprimés.

De plus, cet organe de maintien et de poussée entrant dans la constitution du dispositif selon l'invention, constitue un organe de sécurité permettant de maintenir l'organe mâle en position dans l'étrier en cas de rupture du tirant.

En effet, cet organe de maintien et de poussée qui est indépendant du tirant reste en position entre les parois latérales 6 et 7 de l'étrier, même lorsque le tirant se rompt.

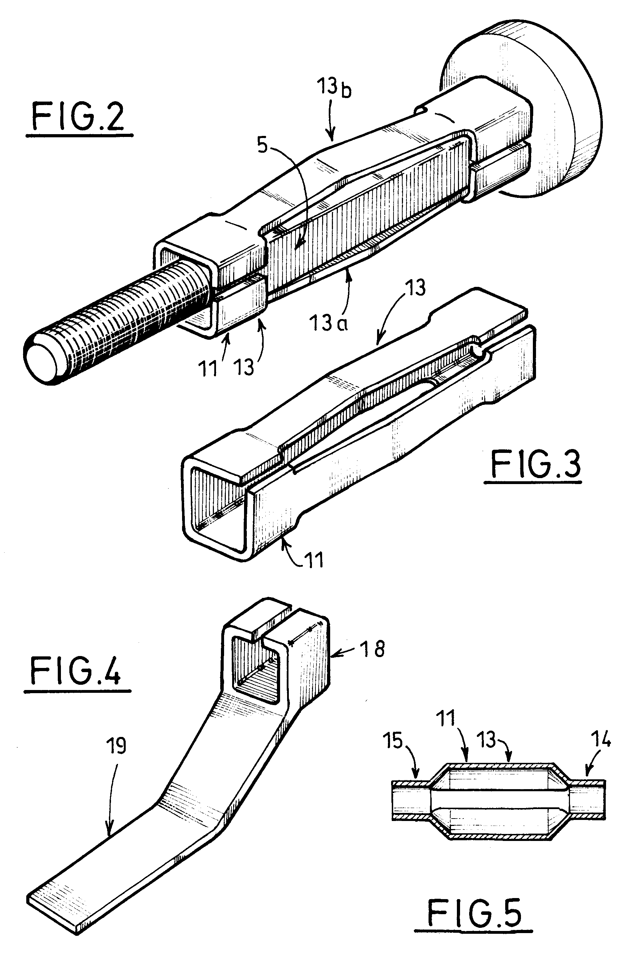

On a représenté sur les Figures 2,3,4, et 5, d'autres modes de réalisation de cet organe de maintien et de poussée déformable par compression.

Comme on peut le voir sur la Fig.2, cet organe de maintien et de poussée peut comporter une âme 13 comprenant deux lames déformables 13a,13b disposées de part et d'autre du tirant 5.

Cependant, cet organe de maintien et de poussée peut également comporter une âme 13 comprenant quatre lames déformables disposées à 90° l'une par rapport à l'autre autour de ce tirant, comme on peut le voir sur la Fig.3.

Sur la Fig.4, on a représenté encore un autre mode de réalisation dans lequel l'organe de maintien et de poussée comprend uniquement une bague d'accrochage 18 reliée à une lame déformable 19.

Sur ces figures, on peut constater que la ou chaque lame présente une zone de déformation préférentielle, cette zone étant délimitée par exemple par des portions initialement déformées en forme de rampe de ces lames.

Sur la Fig.5, on a représenté un autre mode de réalisation d'un organe de maintien 11 dans lequel l'âme centrale 13 de celui-ci s'étendant entre les bagues d'accrochage 14 et 15, présente une zone plane de déformation préférentielle dont la section est supérieure à celle des bagues.

Ces zones de déformation préférentielle, qui dans les modes de réalisation représentés sur ces figures, présentent des sections supérieures à celles des bagues d'accrochage, permettent d'orienter la déformation de l'organe de maintien et de poussée, et constituent également des moyens de maintien en position de cet organe entre les parois latérales de l'étrier, en cas de rupture du tirant, dans la mesure où elles présentent une section supérieure à celle des évidements 16,17 des parois latérales 6 et 7 de l'étrier, de sorte qu'il est nécessaire d'exercer une certaine force sur cet organe pour l'engager entre ces parois latérales. Cet engagement est alors possible grâce à une déformation par exemple élastique de ces zones.

On conçoit donc que l'organe de maintien et de poussée du dispositif de serrage de sécurité selon l'invention peut présenter une double fonction, selon sa structure.

En effet, cet organe peut constituer un organe de sécurité permettant de maintenir l'organe mâle dans l'étrier en cas de rupture du tirant et un organe de poussée de l'organe mâle contre la paroi intermédiaire 12 de l'étrier pour réduire voire supprimer les jeux de montage.

Ceci est rendu possible par le fait que cet organe de maintien et de poussée est disposé le long du tirant en étant indépendant de celui-ci, qu'il présente par exemple une capacité de déformation différente de celle du tirant et qu'il n'est pas soumis aux contraintes exercées sur ce tirant.

Bien entendu, d'autres modes de réalisation de cet organe de maintien et de poussée peuvent être envisagés.

## Revendications

1. Dispositif de serrage de sécurité d'un organe mâle (3) dans un étrier (4) comprenant deux parois latérales (6,7) reliées par une paroi intermédiaire (12) d'un organe femelle, utilisable notamment pour relier deux portions (1,2) d'une colonne de direction de véhicule automobile, du type comportant un tirant (5) s'étendant entre les deux parois latérales (6,7) de l'étrier (4) et dont une extrémité comporte une surface de butée (8) en appui sur l'une des parois latérales (6) de l'étrier (4) et dont l'autre extrémité (9) est filetée et adaptée pour coopérer par vissage avec un écrou de serrage (10), pour rapprocher les parois latérales (6,7) de l'étrier et serrer l'organe mâle dans celui-ci et des moyens de maintien de sécurité de l'organe mâle (3) en position dans l'étrier (4) en cas de rupture du tirant (5), caractérisé en ce que les moyens de maintien de sécurité comprennent un organe de maintien (11) disposé le long du tirant (5) et dont les extrémités coopèrent avec les parois latérales (6,7) de l'étrier (4) pour maintenir l'organe mâle.

2. Dispositif selon la revendication 1, caractérisé en ce que l'organe de maintien est adapté pour exercer, lors du vissage, une force de poussée de l'organe mâle (3) contre la paroi intermédiaire de fond (12) de l'étrier (4).

3. Dispositif selon la revendication 2, caractérisé en ce que l'organe de maintien comprend un organe (11) expansible radialement par compression, lors du vissage, disposé le long du tirant (5) et adapté pour pousser l'organe mâle (3) contre la paroi intermédiaire de l'étrier lors de sa déformation.

4. Dispositif selon la revendication 3, caractérisé en ce que l'organe expansible par compression (11) présente une longueur supérieure à la distance séparant les parois latérales (6,7) de l'étrier avant vissage, de manière à se déformer et donc à pousser l'organe mâle (3) contre la paroi intermédiaire (12) de l'étrier avant le rapprochement de ces parois latérales (6,7) lors du vissage.

5. Dispositif selon la revendication 4, caractérisé en ce que l'organe déformable comprend un manchon de matériau déformable disposé autour du tirant.

6. Dispositif selon la revendication 4, caractérisé en ce que l'organe déformable par compression (11) comporte une portion déformable (13) et des moyens d'accrochage (14,15) s'étendant autour du tirant dans des évidements correspondants (16,17) des parois latérales (6,7) de l'étrier (4).

7. Dispositif selon la revendication 6, caractérisé en ce que l'organe déformable (11) comprend une âme centrale déformable (13) s'étendant entre deux bagues d'accrochage (14,15), le long du tirant.

**8.** Dispositif selon la revendication 7, cararactérisé en ce que l'âme centrale (13) est formée par au moins une lame de matériau déformable venue de matière avec les bagues.

**9.** Dispositif selon la revendication 8, caractérisé en ce que l'âme centrale (13) comporte deux lames (13a, 13b) de matériau déformable disposées de part et d'autre du tirant (5).

**10.** Dispositif selon la revendication 8, caractérisé en ce que l'âme centrale (13) comporte quatre lames de matériau déformable disposées à 90° l'une par rapport à l'autre autour du tirant.

**11.** Dispositif selon la revendication 8,9 ou 10, caractérisé en ce qu'il est prévu des moyens de détrompage et de maintien en position de l'organe de maintien et de poussée, dans l'étrier, de manière qu'il soit engagé entre les parois latérales (6,7) de l'étrier (4) avec une lame (13) en regard de l'organe mâle (3) et maintenu dans cette position lors du vissage.

**12.** Dispositif selon la revendication 11, caractérisé en ce que les moyens de détrompage et de maintien sont formés par une section polygonale d'au moins une bague d'accrochage (14,15) adaptée pour s'engager et coopérer avec un évidement correspondant (16,17) d'une paroi latérale (6,7) de l'étrier, de section complémentaire à celle de la bague.

**13.** Dispositif selon l'une quelconque des revendications 3 à 12, caractérisé en ce que l'organe déformable par compression (11) comporte des zones de déformation préférentielle.

**14.** Dispositif selon la revendication 13, caractérisé en ce que les zones de déformation préférentielles de l'organe déformable (11) sont formées par des portions initialement déformées de celui-ci, de sections supérieures à celles des moyens d'accrochage.

**15.** Dispositif selon l'une quelconque des revendications précédentes, caractérisé en ce que l'organe de maintien comporte des moyens de maintien en position entre les parois latérales (6,7) de l'étrier en cas de rupture du tirant.

**16.** Dispositif selon les revendications 14 et 15, caractérisé en ce que les moyens de maintien en position de l'organe (11) sont formés par les zones de déformation préférentielles de celui-ci.

FIG.1

FIG.2

13b

5

13a

13

11  13

13

FIG.3

11

FIG.4

18

19

15  11  13  14

FIG.5

EP 0 508 856 A1

Office européen
des brevets

**RAPPORT DE RECHERCHE EUROPEENNE**

Numero de la demande

EP    92 40 0850

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 067 783 (PITNER)<br>* revendications; figures *<br>--- | 1 | B62D1/16<br>F16D1/08<br>F16D1/06 |
| A | FR-A-2 625 538 (NACAM)<br>* revendications; figures *<br>--- | 1 | |
| A | US-A-4 628 758 (YUSURIHA)<br>* revendications; figures *<br>--- | 1 | |
| A | FR-A-2 518 924 (USM CORPORATION)<br>* revendications; figures *<br>----- | 1 | |
| | | | **DOMAINES TECHNIQUES RECHERCHES (Int. Cl.5)**<br><br>B62D<br>F16D<br>F16B |

Le présent rapport a été établi pour toutes les revendications

| Lieu de la recherche | Date d'achèvement de la recherche | Examinateur |
|---|---|---|
| LA HAYE | 30 JUIN 1992 | PIRIOU J.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P0402)

8